# EUROPÄISCHE PATENTSCHRIFT

(11) **EP 1 658 314 B1**
(45) Veröffentlichungstag und Bekanntmachung des Hinweises auf die Patenterteilung: **12.09.2007**
(21) Anmeldenummer: 04764341.6
(22) Anmeldetag: 20.08.2004
(51) Int. Cl.: C08F 4/40, C08F 20/00

(54) **VERWENDUNG VON 2-HYDROXY-2-SULFINATOESSIGSÄURE ODER DEREN SALZEN ALS INITIATOR IN W/O-EMULSIONEN**
USE OF 2-HYDROXY-2-SULFINATO ACETIC ACID OR THE SALTS THEREOF AS AN INITIATOR IN W/O EMULSIONS
UTILISATION D'ACIDE 2-HYDROXY-2-SULFINATO-ACETIQUE OU DE SES SELS EN TANT QU'INITIATEUR DANS DES EMULSIONS EAU DANS L'HUILE

(30) Priorität: 21.08.2003 DE 10338447
(43) Veröffentlichungstag der Anmeldung: 24.05.2006
(73) Patentinhaber: BASF Aktiengesellschaft, 67056 Ludwigshafen (DE)
(72) Erfinder: FRANK, Jürgen, 67065 Ludwigshafen (DE); RENZ, Günter, 67251 Freinsheim (DE); SCHUPP, Eberhard, 67269 Grünstadt (DE); STEINMETZ, Bernhard, 97535 Rütschenhausen (DE); MOLTER, Stefan, 67133 Maxdorf (DE); BAYER, Karl, 67308 Einselthum (DE)
(74) Vertreter: Isenbruck, Günter
(86) Internationale Anmeldenummer: PCT/EP2004/009358
(87) Internationale Veröffentlichungsnummer: WO 2005/021598

(56) Entgegenhaltungen:
- US-A1- 2002 055 599

## Beschreibung

Die vorliegende Erfindung betrifft ein Verfahren zur Herstellung von Homo- oder Copolymeren durch Homo- oder Copolymerisation von radikalisch polymerisierbaren wasserlöslichen und/oder wasserdispergierbaren Monomeren, gegebenenfalls mit weiteren Comonomeren und gegebenenfalls mit mindestens einem Vernetzer, in einer inversen Emulsionspolymerisation in Anwesenheit mindestens eines Redoxinitiatorpaares, Homo- oder Copolymere herstellbar nach dem erfindungsgemäßen Verfahren, Wasser-in-Öl-Emulsionen, die mindestens ein erfindungsgemäßes Homo- oder Copolymer enthalten, feste Zusammensetzungen, die mindestens ein erfindungsgemäßes Homo- oder Copolymer enthalten, die Verwendung einer Sulfinsäureverbindung als Reduktionsmittel in einem Verfahren zur Herstellung von Homo- oder Copolymeren durch Homo- oder Copolymerisation von radikalisch polymerisierbaren wasserlöslichen und/oder wasserdispergierbaren Monomeren, gegebenenfalls mit weiteren Comonomeren und gegebenenfalls mit mindestens einem Vernetzer, in einer inversen Emulsionspolymerisation, die Verwendung der mindestens ein erfindungsgemäßes Homo- oder Copolymer enthaltenden Wasser-In-Öl-Emulsion zur Verdickung von wässrigen Lösungen sowie die Verwendung einer Sulfinsäureverbindung als Reduktionskomponente eines Redoxinitiatorpaares umfassend ein Oxidationsmittel und ein Reduktionsmittel zur Vermeidung von Induktionszeiten bei der inversen Emulsionspolymerisation.

Wasser-in-Öl-Emulsionen (W/O-Emulsionen) sind im Allgemeinen aus einer organischen, stationären Phase der Emulsion, im Allgemeinen einer inerten hydrophoben Flüssigkeit (Ölphase) aufgebaut, die eine durch Emulgatoren oder Schutzkolloide stabilisierte, wasserlösliche Homo- oder Copolymere enthaltende wässrige Phase als mobile Phase beinhaltet. Solche W/O-Emulsionen sind unter anderem als Verdickungsmittel für wässrige Systeme interessant. Dazu werden die W/O-Emulsionen in eine Öl-in-Wasser-Emulsion (O/W-Emulsion) invertiert und durch Freisetzung der Homo- oder Copolymere wird ein verdickender Effekt bewirkt.

US 5,216,070 betrifft ein Verfahren zur Herstellung von W/O-Emulsionen von wasserlöslichen Polymeren durch Emulsionspolymerisation der entsprechenden Monomere in Anwesenheit eines Initiators und eines Polysiloxan-Polyalkylen-Polyethercopolymers als Emulgator. Als Initiatorsystem, insbesondere bei der Herstellung von W/O-Emulsionen für den kosmetischen Bereich, Hautpflegebereich oder Haarpflegebereich, wird ein Redoxinitiatorsystem aus tert.-Butylhydroperoxyd/Ascorbinsäure eingesetzt.

EP-A 0 100 693 betrifft fettlösliche Redoxinitiatorsysteme, die in der inversen Emulsionspolymerisation von wasserlöslichen Vinylmonomeren eingesetzt werden können. Diese Redoxinitiatorsysteme umfassen ein organisches Hydroperoxid und ein Thionylchlorid. Mit Hilfe dieses, fettlöslichen Redoxinitiatorsystems sind einfach reproduzierbare und kontrollierbare Polymerisationen bei geringen Temperaturen unter Erhalt von Polymeren mit konstanter Qualität in großtechnischem Maßstab möglich.

GB-A 2 093 464 betrifft eine chemisch initiierte inverse Emulsionspolymerisation. Dabei werden vor Beginn der Polymerisation NaCl, NaBr, LiCl oder LiBr zur wässrigen Phase einer W/O-Emulsion gegeben, wodurch Polymere mit erhöhtem Molekulargewicht in kurzen Reaktionszeiten und mit hohen Umsätzen erhalten werden. Die Polymerisation kann in Anwesenheit von wasserlöslichen Redoxinitiatoren wie Bromat/Bisulfit oder Methabisulfit, Persulfat/Bisulfit und Bisulfit/tert. Butylhydroperoxid erfolgen.

Nachteilig an den aus dem Stand der Technik bekannten inversen Emulsionspolymerisationsverfahren unter Anwendung von Redoxinitiatoren ist häufig das Auftreten einer Induktionszeit der Polymerisation, wodurch Polymere mit nachteiligen Produkteigenschaften wie schlechten Stippen- und Quellkörperwerten erhalten werden. Diese Induktionszeit kann oft nur durch Zugabe von Übergangsmetallsalzen, zum Beispiel Eisen (II)-Salzen, vermieden werden.

So genannte Stippen sind Polymerpartikel, die während der Polymerisation entstehen und eine gewisse Größe überschreiten. Sie werden bei der Aufreinigung der W/O-Emulsion durch Filtration abgetrennt. Bei hohen Stippenanteilen wird somit eine Verteuerung der Herstellkosten durch erhöhten Filtrieraufwand verzeichnet.

Bei Quellkörpern handelt es sich um Teilchen, die sich bei der Anwendung, das heißt bei der Inversion der W/O-Emulsion, zum Beispiel zur Herstellung einer Druckpaste, bilden und eine gewisse Größe überschreiten.

Aufgabe der vorliegenden Anmeldung ist daher die Bereitstellung von wasserlöslichen Homo- oder Copolymeren, die gute Produkteigenschaften, insbesondere gute Stippen- und Quellkörperwerte aufweisen. Eine weitere Aufgabe ist die Bereitstellung eines Verfahrens zur Herstellung der Homo- oder Copolymere sowie diese enthaltender W/O-Emulsionen mit geringem Stippenanteil und niedrigen Quellkörperzahlen, wobei die weiteren Eigenschaften der W/O-Emulsion nicht beeinträchtigt werden.

Diese Aufgabe wird ausgehend von einem Verfahren zur Herstellung von wasserlöslichen oder in wasserquellbaren Homo- oder Copolymeren durch Homo- oder Copolymerisation von radikalisch polymerisierbaren wasserlöslichen und/oder wasserdispergierbaren Monomeren, gegebenenfalls mit weiteren Comonomeren und gegebenenfalls mit mindestens einem Vernetzer, in einer inversen Emulsionspolymerisation in Anwesenheit mindestens eines Redoxinitiatorpaares, umfassend ein Oxidationsmittel und ein Reduktionsmittel, gelöst.

Das erfindungsgemäße Verfahren ist dann dadurch gekennzeichnet, dass das Reduktionsmittel 2-Hydroxy-2-sulfinatoessigsäure und/oder deren Salz ist, wobei bevorzugt als Salze Alkali- und Erdalkalimetallsalze, besonders bevorzugt Li, Na, K, geeignet sind und 2-Hydroxy-2-sulfinatoessigsäuredinatriumsalz ganz besonders bevorzugt ist.

Mit Hilfe des Einsatzes von 2-Hydroxy-2-sulfinatoessigsäure und/oder deren Salz als Reduktionsmittel erfolgt die Homo- oder Copolymerisation gemäß dem erfindungsgemäßen Verfahren ohne Auftreten einer Induktionszeit. Dadurch werden die gewünschten vorteilhaften Produkteigenschaften, insbesondere gute Stippen- und Quellkörperwerte, der mit diesem Verfahren hergestellten Polymere und W/O-Emulsionen erzielt. Somit werden keinerlei Übergangsmetalle in dem erfindungsgemäßen Verfahren benötigt, wodurch eine Verfärbung der W/O-Emulsion und Polymere vermieden wird.

2-Hydroxy-2-sulfinatoessigsäure und deren Salze sind im Stand der Technik bereits bekannt.

So betrifft DE-A 197 43 759 die Verwendung von 2-Hydroxy-2-sulfinato-essigsäuredinatriumsalz als Reduktionsmittel sowie als Cokatalysator in Emulsionspolymerisationen oder Redoxkatalysatorsystemen bei der Kunststoffherstellung. Dabei wird 2-Hydroxy-2-sulfinatoessigsäuredinatriumsalz als Ersatz für Formaldehydsulfoxylate, insbesondere Natriumformaldehydsulfoxylat, eingesetzt, da während des Reduktionsvorganges von 2-Hydroxy-2-sulfinatoessigsäure oder deren Natriumsalz im Gegensatz zu den Formaldehydsulfoxylaten kein Formaldehyd abgespalten wird, das in vielen Kunststoffen oder Polymerdispersionen nicht enthalten sein darf.

US 2002/00 68 791 A1 betrifft ein Verfahren zur Herstellung eines Polymers durch wässrige Emulsionspolymerisation, worin mindestens ein ethylenisch ungesättigtes Monomer in Anwesenheit eines Redoxinitiatorsystems, aufgebaut aus einem wasserlöslichen Oxidationsmittel, einem wasserunlöslichen Oxidationsmittel und einer Sulfinsäure oder deren Salzen als Reduktionsmittel polymerisiert wird. Mit Hilfe dieses Verfahrens wird eine Reduktion des Restgehalts an ethylenisch ungesättigtem Monomer in der gewünschten wässrigen Polymeremulsion erreicht. Unter anderem sind als Sulfinsäureverbindung 2-Hydroxy-2-sulfinatoessigsäure und deren Salze erwähnt.

EP-A 1 201 685 betrifft Bindemittel, die polymerisierte Einheiten von N-Methylolacrylamid enthalten und einen reduzierten Gehalt an Formaldehyd aufweisen. Die Polymere werden durch Emulsionspolymerisation hergestellt, wobei als Initiator ein Redoxinitiatorsystem eingesetzt wird, das als Reduktionsmittel das Glykolsäureaddukt von Natriumsulfit, 2-Hydroxy-2-sulfinatoessigsäuredinatriumsalz, enthält.

Im Stand der Technik wird 2-Hydroxy-2-sulfinatoessigsäure oder deren Salz als Reduktionsmittel eines Redoxinitiatorpaares eingesetzt. Der Einsatz betrifft jedoch lediglich die Verwendung als Reduktionsmittel in der Emulsionspolymerisation, worin Wasser als kontinuierliche Phase eingesetzt wird. Dabei wird 2-Hydroxy-2-sulfinatoessigsäure oder deren Salz als Ersatz von formaldehydbildenden Reduktionsmitteln eingesetzt.

Der Einsatz von 2-Hydroxy-2-sulfinatoessigsäure und/oder deren Salz in der inversen Emulsionspolymerisation, worin als kontinuierliche Phase ein inertes organisches Lösungsmittel eingesetzt wird, ist aus dem Stand der Technik nicht bekannt. Überraschenderweise wurde gefunden, dass bei Einsatz von 2-Hydroxy-2-Sulfinatoessigsäure und/oder deren Salz in der inversen Emulsionspolymerisation das Auftreten von Induktionszeiten vermieden werden kann, ohne dass der Einsatz von Übergangsmetallen erforderlich ist.

Im Folgenden werden die Begriffe Homo- oder Copolymere zu (Co)polymere und die Begriffe Homo- oder Copolymerisation zu (Co)polymerisation zusammengefasst.

Als Monomere sind alle wasserlöslichen und/oder wasserdispergierbaren Verbindungen geeignet, die sich durch radikalische Polymerisation umsetzen lassen. Bevorzugt werden radikalisch polymerisierbare Carbonsäuren, deren Salze oder Derivate als radikalisch polymerisierbare Monomere eingesetzt.

Als radikalisch polymerisierbare Carbonsäuren, deren Salze oder Derivate sind im Allgemeinen allylisch oder vinylisch ungesättigte Carbonsäuren, deren Salze oder Derivate geeignet.

Als allylisch oder vinylisch ungesättigte Carbonsäuren, deren Salze oder Derivate sind bevorzugt allylisch oder vinylisch ungesättigte Mono- oder Dicarbonsäuren, deren Salze oder Derivate geeignet. Besonders bevorzugt sind dabei vinylisch ungesättigte Mono- oder Dicarbonsäuren, die Salze der vorgenannten Säuren, insbesondere die Alkalimetall- und Ammonium-Salze, die Salze polymerer Amine (d. h. polymere Ammoniumsalze) oder Gemische aus Alkali- und Erdalkalimetallsalzen sowie Derivate der genannten Carbonsäuren, insbesondere deren Ester, Amide, Nitrile oder Anhydride. Bevorzugt werden 3 bis 6 Kohlenstoffatome aufweisende α,β-monoethylenisch ungesättigte Mono- oder Dicarbonsäuren wie Acrylsäure und/oder Methacrylsäure, Maleinsäure, Fumarsäure oder Itaconsäure, deren Salze oder Derivate eingesetzt.

Besonders bevorzugt eingesetzte Säuren oder deren Salze sind Acrylsäure, Methacrylsäure, Natriumacrylat, Ammoniumacrylat, Natriummethacrylat oder Ammoniummethacrylat, wobei Acrylsäure oder Ammoniumacrylat ganz besonders bevorzugt sind.

Besonders bevorzugt eingesetzte Ester sind Ester der vorstehend genannten Säuren mit C₁- bis C₁₂-, bevorzugt C₁- bis C₈-Alkanolen. Besonders bevorzugt sind Methyl-, Ethyl- , n-Butyl-, Isobutyl-, tert.-Butyl-, n-Pentyl-, iso-Pentyl und 2-Ethylhexylacrylat und/oder -methacrylat.

Bevorzugt eingesetzte Nitrile sind Acrylamide und alkylsubstituierte Acrylamide wie Acrylamid, Methacrylamid, N, N-Dimethylacrylamid, N-Methylolmethacrylamid, N-tert.-Butylacrylamid, N-Methylmethacrylamid, Methylenbisacrylamid und Mischungen davon, wobei Acrylamid und Methacrylamid besonders bevorzugt sind und Acrylamid ganz besonders bevorzugt ist.

Bevorzugt eingesetzte Anhydride sind Maleinsäureanhydrid oder deren Derivate.

Die vorstehend genannten Monomere können in dem erfindungsgemäßen (Co)polymerisationsverfahren allein oder gemeinsam mit verschiedenen der genannten Monomeren eingesetzt werden.

In einer bevorzugten Ausführungsform werden die vorstehend genannten allylisch oder vinylisch ungesättigten Carbonsäuren, insbesondere Acrylsäure und Methacrylsäure, ganz besonders bevorzugt Acrylsäure, oder deren Ammonium- oder Natriumsalze allein eingesetzt oder in Kombination mit den vorstehend genannten Acrylamiden oder alkylsubstituierten Acrylamiden, bevorzugt Acrylamid oder Methacrylamid, besonders bevorzugt Acrylamid. Ganz besonders bevorzugt werden Ammoniumacrylat und Acrylamid copolymerisiert.

Gegebenenfalls kann das erfindungsgemäße Verfahren in Anwesenheit weiterer Comonomere, neben den bereits genannten Monomeren, erfolgen. Solche weiteren geeigneten Comonomere sind zum Beispiel sulfogruppenhaltige Monomere wie Allylsulfonsäure, Methallylsulfonsäure, Styrolsulfonsäure, Vinylsulfonsäure, 2-Acrylamido-2-methylpropansulfonsäure, Allyloxybenzolsulfonsäure, deren entsprechende Alkali- oder Ammoniumsalze bzw. deren Mischungen sowie Sulfopropylacrylat und/oder Sulfopropymethacrylat.

Weitere geeignete Comonomere sind C₁- bis C₄-Hydroxyalkylester von C₃- bis C₆-Mono- oder Dicarbonsäuren, insbesondere von Acrylsäure, Methacrylsäure, Maleinsäure oder deren mit 2 bis 50 Mol Ethylenoxyd, Propylenoxyd, Butylenoxyd oder Mischungen davon, alkoxylierte Derivate oder Ester von mit 2 bis 50 mol Ethylenoxyd, Propylenoxyd, Butylenoxyd oder Mischungen davon alkoxylierten C₁- bis C₁₈-Alkoholen mit den erwähnten Säuren wie Hydroxyethylacrylat, Hydroxyethylmethacrylat, Hydroxypropylacrylat, Hydroxypropylmethacrylat, Butandiol-1,4-monoacrylat, E-thyldiglykolacrylat, Methylpolyglykolacrylat (11 EO), (Meth)acrylsäureester von mit 3, 5, 7, 10 oder 30 Mol Ethylenoxyd umgesetztem C₁₃/C₁₅-Oxoalkohol bzw. deren Mischungen.

Des Weiteren sind als weitere geeignete Comonomere Alkylaminoalkyl(meth)acrylate oder Alkylaminoalkyl(meth)acrylamide oder deren Quaternisierungsprodukte wie 2-(N, N-Dimethylamino)-ethyl(meth)acrylat oder 2-(N,N,N-Trimethylammonium)-ethylmethacrylat-chlorid, 3-(N,N-Dimethylamino)-propyl)methacrylat, 2-Dimethylaminoethyl(meth)acrylamid, 3-Dimethylaminopropyl(meth)acrylamid, 3-Trimethyl-ammoniumpropyl(meth)acrylamid-chlorid und Mischungen davon geeignet.

Weiterhin sind als weitere Comonomere 1,3-Diketogruppen enthaltende Monomere wie Acetoacetoxyethyl(meth)acrylat oder Diacetonacrylamid, harnstoffgruppenhaltige Monomere wie Ureidoethyl(meth)acrylat, Acrylamidglykolsäure, Methacrylamidoglykolatmethylether, Silylgruppen enthaltende Monomere wie Triethoxysilylpropylmethacrylat geeignet.

In einer bevorzugten Ausführungsform des erfindungsgemäßen Verfahrens wird eine radikalisch polymerisierbare, bevorzugt allylisch oder vinylisch ungesättigte Carbonsäure oder deren Salz homopolymerisiert oder gemeinsam mit Estern und/oder Amiden von allylisch oder vinylisch ungesättigten Mono- oder Dicarbonsäuren copolymerisiert. Geeignete Carbonsäuren, deren Salze sowie geeignete Ester und Amide sind bereits vorstehend genannt. Ganz besonders bevorzugt wird ein Gemisch aus einer allylisch oder vinylisch ungesättigten Carbonsäure oder deren Salz und Acrylamiden eingesetzt. Bevorzugte allylisch oder vinylisch ungesättigte Carbonsäuren oder deren Salze sowie bevorzugte Acrylamide sind bereits vorstehend genannt. Insbesondere bevorzugt wird eine Mischung aus Acrylsäure oder Methacrylsäure oder deren Ammonium- oder Alkalimetallsalzen und Acrylamid oder Methacrylamid eingesetzt.

Insbesondere bevorzugt ist eine Mischung aus Ammoniumacrylat und Acrylamid.

Zusätzlich können gegebenenfalls multifunktionelle Comonomere (Vernetzer) eingesetzt werden, die für ein leichte Vernetzung der entstehenden (Co)polymere sorgen.

Geeignete Vernetzer sind insbesondere Methylenbisacryl - bzw. -methacrylamid, Ester ungesättigter Mono- oder Polycarbonsäuren von Polyolen, wie Diacrylat oder Triacrylat, zum Beispiel Butandiol- oder Ethylenglykoldiacrylat bzw. -methacrylat sowie Trimethylolpropantriacrylat und Allylverbindungen wie Allyl(meth)acrylat, Triallylcyanurat, Maleinsäurediallylester, Polyallylester, Tetraallyloxyethan, Triallylamin, Tetraallylethylendiamin, Allylester der Phosphorsäure sowie Vinylphosphonsäurederivate, wie sie beispielsweise in EP-A 343 427 beschrieben sind.

Außerdem können noch Reagentien, die durch nucleophile und/oder elektrophile Additions- und/oder Substitutionsreaktionen Vernetzungen bilden können, als Vernetzer wirken. Als Beispiele können hier Polyepoxide, Polyole, Polyaziridine usw. gelten.

Wird eine Copolymerisation durchgeführt, so werden im Allgemeinen
- 60 bis 99,9 Gew.-%, bevorzugt 70 bis 99 Gew.-%, besonders bevorzugt 80 bis 98 Gew.-% mindestens eines radikalisch polymerisierbaren wasserlöslichen und/oder wasserdispergierbaren Monomeren, bevorzugt mindestens eine, besonders bevorzugt allylisch oder vinylisch ungesättigte, Carbonsäure oder deren Salz oder deren Derivat, ganz besonders bevorzugt ausgewählt aus der Gruppe bestehend aus Estern, Amiden, Nitrilen und Anhydriden von vinylisch ungesättigten Mono- oder Dicarbonsäuren,
- 0,1 bis 40 Gew.-%, bevorzugt 1 bis 30 Gew.-%, besonders bevorzugt 2 bis 20 Gew.- % mindestens eines weiteren Comonomeren, und
- 0 bis 5 Gew.-%, bevorzugt 0,1 bis 2 Gew.-%, besonders bevorzugt 0,1 bis 1 Gew.-% mindestens eines multifunktionellen Comonomeren (Vernetzer) eingesetzt,
wobei die Gesamtsumme der Monomeren und Comonomeren 100 Gew.-% ergibt.

Bevorzugte Verbindungen der jeweils genannten Verbindungsgruppen sind bereits vorstehend erwähnt.

Bevorzugt werden in dem erfindungsgemäßen Verfahren die folgenden Monomere eingesetzt:
- Acrylsäure, Methacrylsäure oder deren Ammonium- oder Alkalimetallsalze, bevorzugt Ammoniumacrylat,
- gegebenenfalls Acrylamid, Methacrylamid, Methylacrylat, Ethylacrylat, Methylmethacrylat oder Ethylmethacrylat, bevorzugt Acrylamid oder Methacrylamid, besonders bevorzugt Acrylamid,
- gegebenenfalls Methylenbisacrylamid, Polyethylenglycoldiacrylat, N,N'-Divinyl-ethylenharnstoff und Acrylsäureester von Glykol, Butandiol, Trimethylolpropan oder Glycerin, oder Acrylsäureester von mit Ethylenoxid und/oder Epichlorhydrin umgesetztem Glykol, Butandiol, Trimethylolpropan oder Glycerin.

Die (Co)polymerisation der eingesetzten Monomere und Comonomere erfolgt durch radikalische Polymerisation als inverse Emulsionspolymerisation in Anwesenheit mindestens eines Redoxinitiatorpaares und gegebenenfalls mindestens eines Reglers.

Das Redoxinitiatorpaar umfasst ein Oxidationsmittel und ein Reduktionsmittel, welches erfindungsgemäß 2-Hydroxy-2-sulfinatoessigsäure und/oder deren Salz ist.

Als Oxidationsmittel sind alle im Stand der Technik bekannten Oxidationsmittel eines Redoxinitiatorpaares zur freien radikalischen Polymerisation geeignet. Bevorzugt werden Persulfate, Azoverbindungen und Peroxide oder Kombinationen davon eingesetzt. Geeignete Peroxide sind zum Beispiel Wasserstoffperoxid, tert.-Butylhydroperoxid und tert.-Amylhydroperoxid, bevorzugt Wasserstoffperoxid. Geeignete Persulfate sind Alkalimetallpersulfate, bevorzugt Natriumperoxodisulfat. Besonders bevorzugt wird somit als Redoxinitiatorpaar Natriumperoxodisulfat oder Wasserstoffperoxid als Oxidationsmittel und 2-Hydroxy-2-sulfinatoessigsäuredinatriumsalz als Reduktionsmittel eingesetzt.

Im Allgemeinen wird das Redoxinitiatorpaar in einer Menge von 0,001 bis 10 Gew.-%, bevorzugt 0,01 bis 5 Gew.-%, bezogen auf die Menge der eingesetzten Monomere, eingesetzt.

Es wurde gefunden, dass die (Co)polymerisation des erfindungsgemäßen Verfahrens auch bei Anwendung geringer Mengen an Oxidationskomponente ohne Auftreten einer Induktionszeit erfolgt. Die Zugabe von Übergangsmetallverbindungen zur Vermeidung oder Verminderung der Induktionszeit ist in dem erfindungsgemäßen Verfahren nicht erforderlich.

Die (Co)polymerisation kann gegebenenfalls auch in Gegenwart von Polymerisationsreglern durchgeführt werden, um das Molekulargewicht der Polymerisate zu regeln. Sofern man besonders niedrigmolekulare (Co)polymerisate herstellen will, setzt man höhere Mengen an Polymerisationsreglern ein, während man für die Herstellung von hochmolekularen (Co)polymerisaten nur geringe Mengen an Polymerisationsreglern verwendet bzw. in Abwesenheit dieser Stoffe arbeitet. Geeignete Polymerisationsregler sind Verbindungen mit einer hohen Übertragungskonstante wie schwefelhaltige Verbindungen z. B. Mercaptane, wie 1-Dodecanthiol, 2-Mercapto-ethanol, Mercaptopropanole, Mercaptopropionsäure; Halogenmethane, wie Tri-, Tetrachlormethan; Allylalkohol; Ameisensäure; Aldehyde, wie Acetaldehyd und Acetate. Die Polymerisationsregler werden, bezogen auf die eingesetzten Monomere, in einer Menge von 0 bis 10, bevorzugt 0 bis 5 Gew.-%, eingesetzt. Dabei ist zu berücksichtigen, dass auch das Lösungsmittel, der Initiator und die Monomere selbst als Kettenüberträger und damit als Regler wirken können.

In einer bevorzugten Ausführungsform umfasst das erfindungsgemäße Verfahren die folgenden Schritte:
- Lösen mindestens eines Wasser-in-Öl-Emulgators oder mindestens eines Schutzkolloids in einer für die Polymerisation inerten hydrophoben Flüssigkeit, wodurch eine Ölphase gebildet wird,
   a) Lösen der Monomere, gegebenenfalls der weiteren Comonomere, gegebenenfalls des mindestens einen Vernetzers, mindestens eines WasserÖl-in-Emulgators und des mindestens einen Redox-Initiators in Wasser, wodurch eine wässrige Phase gebildet wird,
   b) Mischen der Ölphase und der wässrigen Phase bis die wässrige Phase in der Ölphase emulgiert ist,
   c) Homo- oder Copolymerisation der eingesetzten Monomere, gegebenenfalls der weiteren Comonomere und gegebenenfalls des mindestens einen Vernetzers.

   Geeignete für die Polymerisation inerte hydrophobe Flüssigkeiten sind im Allgemeinen organische Lösungsmittel wie aliphatische, cycloaliphatische oder aromatische Kohlenwasserstoffe, beispielsweise Hexan oder Heptan, Cyclohexan, Toluol oder Xylole. Daneben sind auch organische Etherverbindungen wie Tetrahydrofuran sowie halogenierte Kohlenwasserstoffe einsetzbar. Weiterhin können pflanzliche Öle eingesetzt werden. Des Weiteren sind Mineralöle als inerte hydrophobe Flüssigkeiten geeignet. Geeignete Mineralöle sind solche, die im wesentlichen aus mineralischen Rohstoffen wie Erdöl, Kohle, Holz oder Torf gewonnenen flüssigen Destillationsprodukte, welche überwiegend aus Gemischen von gesättigten Kohlenwasserstoffen bestehen. Beispiele für derartige Mineralöle sind Benzin, Dieselöle, Heizöle, Schmieröle, Leuchtpetroleum °C≡®®der Isolieröle. Besonders bevorzugt werden als inerte hydrophobe Flüssigkeiten Mineralöle und Petrolether ausgewählt aus Kohlenwasserstoffen eingesetzt.
   Geeignete Wasser-in-Öl-Emulgatoren sind anionische, nicht-ionische, kationische und amphotere Emulgatoren. Geeignete anionische Emulgatoren sind beispielsweise Alkylbezolsulfonsäuren, sulfonierte Fettsäuren, Sulfosuccinate, Fettalkoholsulfate, Alkylphenolsulfate und Fettalkoholethersulfate. Geeignete nicht-ionische Emulgatoren sind Alkylphenolethoxylate, primär Alkoholethoxylate, Fettsäureetholxylate, Alkoholamidethoxylate, Fettaminethoxylate, Ethylenoxid/Propylenoxid-Blockcopolymere und Alkylpolyglykoside. Als kationische bzw. amphotere Emulgatoren sind quaternisierte A-minalkoxylate, Alkylbetaine, Alkylamidobetaine und Sulfobetaine geeignet.
   Geeignete Schutzkolloide sind beispielsweise Cellulosederivate, Polyethylenglykol, Polypropylenglykol, Copolymeriste aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylimidazolin und Maleinsäure bzw. Maleinsäureanhydrid enthaltende Copolymerisate, wie sie zum Beispiel in DE-A 2 501 123 beschrieben sind.
   Die Emulgatoren oder Schutzkolloide werden üblicherweise in einer Menge von 0,05 bis 40 Gew.-%, bevorzugt 0,05 bis 20 Gew.-%, bezogen auf die Gesamtmenge der bei der (Co)polymerisation eingesetzten Monomere, eingesetzt.
   Werden als Monomere allylisch oder vinylisch ungesättigte Carbonsäuren eingesetzt, so können diese vor oder während der (Co)polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine wie Ethylamin, Propylamin, Monoisopropylamin, Monobutylamin, Hexylamin, Ethanolamin, Dimethylamin, Diethylamin, Di-n-proplyamin, Tributylamin, Triethanolamin, Dimethoxyethylamin, 2-Ethoxyethylamin, 3-Ethoxypropylamin, Dimethylethanolamin, Diisopropanolamin oder Morpholin in Frage. Bevorzugt werden Natriumhydroxid und Ammoniak eingesetzt.
   Des Weiteren können in dem erfindungsgemäßen Verfahren übliche Zusätze je nach Anwendungszweck der hergestellten Copolymere und W/O-Emulsion eingesetzt werden. Beispielsweise ist - in Abhängigkeit vom Anwendungszweck - der Einsatz von strahlungs- und/oder wärmehärtbaren Materialien (Vernetzer), Bakteriziden oder Bioziden möglich. Darüber hinaus können zum Beispiel Hydrophobierungsmittel eingesetzt werden. Geeignete Hydrophobierungsmittel sind übliche wässrige Paraffindispersionen oder Silicone. Weiter können Stabilisatoren, Entschäumer, Komplexbildner, Netzmittel, Verdickungsmittel, Dispersionen, Plastifizierungsmittel, Retentionsmittel, Pigmente, Füllstoffe und weitere dem Fachmann bekannte Hilfsmittel eingesetzt werden.
   Die Ölphase enthaltend mindestens einen Wasser-in-Öl-Emulgator oder mindestes ein Schutzkolloid in einer für die Polymerisation inerten hydrophoben Flüssigkeit wird mit einer wässrigen Phase enthaltend die eingesetzten Monomere, gegebenenfalls die weiteren Comonomere, mindestens einen Öl-in-Wasser-Emulgator und gegebenenfalls mindestens einen Vernetzer und mindestens einen Redoxinitiator in Wasser gemischt, bis die wässrige Phase in der Ölphase emulgiert ist. Dieses Mischen kann auf jede dem Fachmann bekannte Art und Weise erfolgen. Bevorzugt wird dazu die wässrige Phase zu der Ölphase unter Rühren hinzugefügt. Es ist jedoch auch eine andere Zugabereihenfolge denkbar.
   Nachdem die wässrige Phase in der Ölphase emulgiert ist, erfolgt die (Co)polymerisation der eingesetzten Monomere und gegebenenfalls weiteren Comonomere. Diese wird im Allgemeinen bei Temperaturen von 5 bis 95°C, bevorzugt 15 bis 85°C, besonders bevorzugt 20 bis 80°C durchgeführt.
   Die erfindungsgemäß hergestellten (Co)polymere können nach dem Fachmann bekannten Verfahren isoliert werden.
   Aufgrund des erfindungsgemäß eingesetzten Reduktionsmittels wird das Auftreten einer Induktionszeit bei der (Co)polymerisation vermieden. Die Zugabe von Übergangsmetallverbindungen ist nicht erforderlich. In einer bevorzugten Ausführungsform des erfindungsgemäßen Verfahrens werden daher keine Übergangsmetallverbindungen zugegeben.
   Das Massenverhältnis von Ölphase zu wässriger Phase beträgt in dem erfindungsgemäßen Verfahren im Allgemeinen 1 zu 19 bis 1 zu 2, bevorzugt 1 zu 10 bis 1 zu 2, besonders bevorzugt 1 zu 5 bis 1 zu 3.
   Mit Hilfe des erfindungsgemäßen Verfahrens werden (Co)polymere erhalten, die hervorragende Produkteigenschaften, insbesondere gute Stippen- und Quellkörperwerte sowie geringe Restmonomerengehalte, aufweisen.
   Ein weiterer Gegenstand der vorliegenden Erfindung sind daher Homo- oder Copolymere herstellbar nach dem erfindungsgemäßen Verfahren. Diese zeichnen sich gegenüber Homo- oder Copolymeren, die nach Verfahren gemäß dem Stand der Technik hergestellt wurden durch hervorragende Produkteigenschaften aus. Bevorzugt weisen die erfindungsgemäßen (Co)polymere einen Restmonomerengehalt von maximal 5 Gew.- %, bevorzugt maximal 3 Gew:-%, besonders bevorzugt maximal 1 Gew.-%, bezogen auf die Gesamtmasse der (Co)polymere, auf.
   Bevorzugte und besonders bevorzugte (Co)polymere werden erhalten, wenn die bevorzugten und besonders bevorzugten Monomere und gegebenenfalls weiteren Comonomere eingesetzt werden. Ganz besonders bevorzugt werden somit Copolymere aus Ammoniumacrylat und Acrylamid erhalten, die gegebenenfalls leicht vernetzt sind.
   Die erfindungsgemäßen (Co)polymere werden bevorzugt in W/O-Emulsionen eingesetzt. Ein weiterer Gegenstand der vorliegenden Anmeldung sind daher Wasser-in-Öl-Emulsionen (W/O-Emulsionen) enthaltend eine Ölphase, die mindestens einen Wasser-in-Öl-Emulgator oder mindestens ein Schutzkolloid in einer inerten hydrophoben Flüssigkeit enthält, und eine in der Ölphase emulgierte wässrige Phase, die mindestens ein erfindungsgemäßes Homo- oder Copolymer und mindestens einen Öl-in-Wasser-Emulgator enthält. Die erfindungsgemäßen W/O-Emulsionen werden mit Hilfe des erfindungsgemäßen Verfahrens direkt erhalten, wobei eine weitere Aufarbeitung bzw. Isolierung des erstandenen (Co)polymers nicht erforderlich ist. Geeignete inerte hydrophobe Flüssigkeiten, Wasser-in-Öl-Emulgatoren, Schutzkolloide sowie geeignete (Co)polymere sind bereits vorstehend genannt. Die erfindungsgemäßen W/O-Emulsionen können des Weiteren - je nach Anwendungszweck - übliche Zusätze enthalten. Geeignete übliche Zusätze sind vorstehend genannt.
   Die erfindungsgemäßen W/O-Emulsionen zeichnen sich insbesondere durch geringe Stippenanteile aus.
   Ein weiterer Gegenstand der vorliegenden Anmeldung ist daher eine erfindungsgemäße W/O-Emulsion, die einen Stippenanteil von maximal 0,5 Gew.-%, bevorzugt maximal 0,1 Gew.-%, besonders bevorzugt maximal 0,01 Gew.-%, bezogen auf die Gesamtmasse der W/O-Emulsion, aufweist.
   Bevorzugt enthält die erfindungsgemäße W/O-Emulsion
- 0,1 bis 8 Gew.-%, bevorzugt 0,5 bis 5 Gew.-%, besonders bevorzugt 1 bis 5 Gew.-% mindestens eines Wasser-in-Öl-Emulgators oder mindestens eines Schutzkolloids,
- 0,1 bis 8 Gew.-%, bevorzugt 0,5 bis 5 Gew.-%, besonders bevorzugt 1 bis 5 Gew.-% mindestens eines Öl-in-Wasser-Emulgators (Netzmittel),
- 5 bis 50 Gew.-%, bevorzugt 10 bis 40 Gew.-%, besonders bevorzugt 20 bis 30 Gew.- % mindestens eines erfindungsgemäßen Homo- oder Copolymers,
- 10 bis 40 Gew.%, bevorzugt 15 bis 30 Gew.-%, besonders bevorzugt 15 bis 25 Gew.-% einer inerten hydrophoben Flüssigkeit,
- 10 bis 60 Gew.-%, bevorzugt 20 bis 50 Gew.-%, besonders bevorzugt 30 bis 50 Gew.-% einer wässrigen Phase,
- 0 bis 20 Gew.-%, bevorzugt 0,5 bis 15 Gew.-%, besonders bevorzugt 1 bis 10 Gew.- % Hilfsstoffe und übliche Zusätze;
wobei die Gesamtsumme der genannten Komponenten 100 Gew.-% beträgt.

Es ist ebenfalls möglich, im Anschluss an die (Co)polymerisation gemäß dem erfindungsgemäßen Verfahren die inerte hydrophobe Flüssigkeit und das Wasser zu entfernen. Die Entfernung erfolgt dabei nach dem Fachmann bekannten Verfahren. Dabei wird eine feste Zusammensetzung erhalten, enthaltend mindestens einen Wasser-in-Öl-Emulgator oder mindestens ein Schutzkolloid, mindestens einen Öl-in-Wasser-Emulgator (Netzmittel) und mindestens ein erfindungsgemäßes Homo- oder Copolymer sowie gegebenenfalls übliche Zusätze. Ein weiterer Gegenstand der vorliegenden Erfindung sind daher feste Zusammensetzungen enthaltend mindestens einen Wasser-in-Öl-Emulgator oder mindestens ein Schutzkolloid und mindestens ein erfindungsgemäßes Homo- oder Copolymer sowie gegebenenfalls übliche Zusätze. Geeignete übliche Zusätze sind vorstehend genannt.

Die erfindungsgemäße feste Zusammensetzung enthält bevorzugt
- 0,2 bis 16 Gew.-%, bevorzugt 1,0 bis 10 Gew.-%, besonders bevorzugt 2 bis 10 Gew.-% mindestens eines Wasser-in-Öl-Emulgators oder mindestens eines Schutzkolloids,
- 0,2 bis 16 Gew.-%, bevorzugt 1 bis 10 Gew.-%, besonders bevorzugt 2 bis 10 Gew.- % mindestens eines Öl-in-Wasser-Emulgators (Netzmittel) und
- 10 bis 99,6 Gew.-%, bevorzugt 20 bis 79,7 Gew.-%, besonders bevorzugt 40 bis 60 Gew.-% mindestens eines erfindungsgemäßen Homo- oder Copolymers,
- 0 bis 40 Gew.-%, bevorzugt 1,0 bis 30 Gew.-%, besonders bevorzugt 2 bis 20 Gew.-% übliche Zusätze
wobei die Gesamtsumme der Komponenten 100 Gew.-% ergibt.

Diese festen Zusammensetzungen können durch Zugabe einer inerten hydrophoben Flüssigkeit und Wasser in W/O-Emulsionen umgewandelt werden. Die Zusammensetzungen von solchen W/O-Emulsionen sind bereits vorstehend genannt.

Ein weiterer Gegenstand der vorliegenden Erfindung ist die Verwendung von 2-Hydroxy-2-sulfinatoessigsäure oder dessen Salz als Reduktionsmittel in einem Verfahren zur Herstellung von Homo- oder Copolymeren durch Homo- oder Copolymerisation von radikalisch polymerisierbaren Carbonsäuren, deren Salzen oder Derivaten als Monomere, gegebenenfalls mit weiteren Comonomeren und gegebenenfalls mindestens einem Vernetzer in einer inversen Emulsionspolymerisation in Anwesenheit mindestens eines Redoxinitiatorpaares umfassend ein Oxidationsmittel und ein Reduktionsmittel. Bevorzugt eingesetzte Salze von 2-Hydroxy-2-Sulfinatoessigsäure, Monomere, gegebenenfalls weitere Comonomere und gegebenenfalls eingesetzte Vernetzer sowie bevorzugte Bedingungen und Komponenten der inversen Emulsionspolymerisation und bevorzugte Oxidationsmittel sind bereits vorstehend genannt. Als Reduktionsmittel wird besonders bevorzugt 2-Hydroxy-2-sulfinatoessigsäuredinatriumsalz eingesetzt.

Durch Verwendung der 2-Hydroxy-2-sulfinatoessigsäure oder dessen Salz ist eine Polymerisation der genannten Monomere und gegebenenfalls Comonomere ohne Auftreten einer Induktionszeit bereits bei geringen Mengen an Oxidationskomponente möglich. Geeignete Mengen an Oxidations- und Reduktionskomponente sowie der weiteren Komponenten sind bereits vorstehend genannt. Der Einsatz von Übergangsmetallen zur Vermeidung oder Verkürzung der Induktionszeit ist nicht erforderlich. Bevorzugt erfolgt die erfindungsgemäße Verwendung daher ohne Zugabe von Übergangsmetallverbindungen. Mit Hilfe der erfindungsgemäßen Verwendung werden (Co)polymere erhalten, die vorteilhafte Produkteigenschaften, insbesondere gute Stippen- und Quellkörperwerte aufweisen.

Die die erfindungsgemäßen (Co)polymere enthaltenden Wasser-in-Öl-Emulsionen werden im Allgemeinen zur Verdickung von wässrigen Lösungen eingesetzt. Dabei wird eine wässrige Lösung mit der erfindungsgemäßen W/O-Emulsion versetzt, wodurch nach Inversion zu einer Öl-in-Wasser-Emulsion (O/W-Emulsion) die Freisetzung der erfindungsgemäßen (Co)polymere erfolgt, wodurch ein verdickender Effekt bewirkt wird.

Ein weiterer Gegenstand der vorliegenden Erfindung ist daher die Verwendung der erfindungsgemäßen Wasser-in-Öl-Emulsionen bzw. von Wasser-in-Öl-Emulsionen enthaltend das erfindungsgemäße (Co)polymer zur Verdickung von wässrigen Lösungen, bevorzugt zur Verdickung von Druckpasten.

Aufgrund der erfindungsgemäßen Verwendung sind Druckpasten mit geringen Quellkörperanteilen erhältlich.

Ein weiterer Gegenstand der vorliegenden Anmeldung sind daher Druckpasten enthaltend Homo- oder Copolymere gemäß der vorliegenden Anmeldung, die einen Quellkörperanteil von maximal 0,5 Gew.-%, bevorzugt maximal 0,15 Gew.-%, bezogen auf die Gesamtmasse der Druckpaste, aufweisen.

Bei der Verwendung zur Verdickung von Druckpasten, insbesondere im Bereich der Textilindustrie, wird eine wässrige Lösung von Pigmenten mit einer erfindungsgemäßen W/O-Emulsion bzw. einer W/O-Emulsion, die mindestens ein erfindungsgemäßes (Co)polymer enthält, versetzt, wodurch nach Inversion zu einer O/W-Emulsion durch Freisetzung der erfindungsgemäßen (Co)polymere ein verdickender Effekt bewirkt wird. Diese verdickende Wirkung wird ausgenutzt, um beim Textildruck eine scharfe Kontur zu gewährleisten. Durch Einsatz der erfindungsgemäßen (Co)polymere bzw. der erfindungsgemäßen W/O-Emulsionen wird eine Stippen bzw. Quellkörperbildung vermieden bzw. gegenüber aus dem Stand der Technik bekannten (Co)polymeren vermindert.

Weitere wässrige Lösungen neben Druckpasten, worin die erfindungsgemäßen W/O-Emulsionen bzw. die erfindungsgemäßen (Co)polymere in W/O-Emulsionen zur Verdickung von wasserhaltigen Systemen eingesetzt werden, sind zum Beispiel wässrige Lösungen im Bereich der Kosmetik, Hautpflege oder Haarpflege. Des Weiteren können die erfindungsgemäßen W/O-Emulsionen bzw. die erfindungsgemäßen Copolymere in wässrigen Lösungen zur Imprägnierung von hydrophilierfähigen Materialien wie Leder, Papier, Textilien, Vliesstoffen sowie in Anwendungen im Agrarbereich eingesetzt werden.

Ein weiterer Gegenstand der vorliegenden Erfindung ist die Verwendung von 2-Hydroxy-2-sulfinatoessigsäure oder deren Salz, bevorzugt Dinatriumsalz, als Reduktionskomponente eines Redoxinitiatorpaares umfassend ein Oxidationsmittel und ein Reduktionsmittel zur Vermeidung von Induktionszeiten bei der inversen Emulsionspolymerisation von radikalisch polymerisierbaren wasserlöslichen und/oder wasserdispergierbaren Monomeren, bevorzugt allylisch oder vinylisch ungesättigten Carbonsäuren, deren Salzen oder Derivaten als Monomere, gegebenenfalls mit weiteren Comonomeren, wobei keine Übergangsmetallverbindungen zugegeben werden. Mit Hilfe des Einsatzes von 2-Hydroxy-2-sulfonatoessigsäure oder deren Salz als Reduktionskomponente ist es möglich, Induktionszeiten bei der inversen Emulsionspolymerisation zu vermeiden und so (Co)polymere mit hervorragend Produkteigenschaften, insbesondere guten Stippen- und Quellkörperwerten, herzustellen. Bevorzugte Monomere, gegebenenfalls eingesetzte Comonomere, Oxidationskomponenten und Reaktionsbedingungen sind bereits vorstehend genannt. Als Reduktionskomponente wird bevorzugt 2-Hydroxy-2-sulfinatoessigsäuredinatriumsalz eingesetzt.
Die nachfolgenden Beispiele erläutern die Erfindung zusätzlich.

### Beispiele

### a) Definitionen

### Stippen:

Polymerpartikel, die während der Polymerisation entstehen und eine gewisse Größe überschreiten. Sie werden bei der Aufreinigung der W/O-Emulsion durch Filtration abgetrennt. Bei hohen Stippenanteilen wird somit eine Verteuerung der Herstellkosten durch erhöhten Filtrieraufwand verzeichnet. Die Bestimmung der Stippen geschieht über eine Filtration der W/O-Emulsion über einen 125*µ*m-Filter im Anschluss an ihre Herstellung. Der Stippenanteil wird in % der Gesamtmasse der W/O-Emulsion angegeben.

### Quellkörper:

Teilchen, die sich bei der Anwendung, d.h. bei der Inversion der W/O-Emulsion zur Herstellung der Druckpaste, bilden und eine gewisse Größe überschreiten. Die Bestimmung der Quellkörper geschieht durch Inversion durch Rühren von 100 g einer W/O-Emulsion in 8/VE-Wasser und 2 g Luprintol PE neu, anschließende abpressende Filtration dieser Paste durch eine Gaze mit 80 *µ*m Porengröße und Entwässern und Auswiegen des Rückstandes. Die Angabe erfolgt in % der jeweiligen Paste.

Durch den Einsatz von 2-Hydroxy-2-sulfinatoessigsäure, oder dessen Salz, insbesondere 2-Hydroxy-2-sulfinatoessigsäure Dinatriumsalz (=Brüggolite FF6) der Firma Brüggemann Chemical als Reduktionskomponente konnte eine. Methode gefunden werden, in der auch bei niedrigen Mengen an Oxidationskomponente keinerlei Induktionszeit auftritt und die Emulsionspolymerisate vorteilhafte Anwendungseigenschaften besitzen.

Dies ermöglicht die Entwicklung einer übergangsmetallfreien Herstellungsmethode von W/O-Emulsionen, die geringe Stippen- und Quellkörperzahlen bei Erhalt der spezifikationsrelevanten Eigenschaften aufweisen.

### Allgemeine Arbeitsvorschrift für die Beispiele 1 bis 7

In einem Rührgefäß wurden 407 g destilliertes Wasser mit 300 g Acrylsäure (100%ig) sowie 284 g einer 50 %igen wässrigen Lösung von Ammoniak, 75 g einer 50 %igen wässrigen Lösung von Acrylamid, 27 g einer 1 %igen wässrigen Lösung von Methylenbisacrylamid, 7,08 g einer 0,4 %igen wässrigen Lösung von Trilon D, 6,75 g einer 1 %igen wässrigen Lösung von Ameisensäure und der in Tabelle 1 angegebenen Menge einer 1 %igen wässrigen Lösung von Brüggolite FF6 vermischt. Nach erfolgter Neutralisation der wässrigen Phase mit dem vorhandenen Ammoniak wurde diese in ein zweites geschlossenes Rührgefäß (2 Liter HWS, mit Ankerrührer) gegeben, in der sich eine organische Phase aus 300 g Shellsol D70 (100 %ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert, auf 31°C aufgeheizt und ein Zulauf aus einer in Tabelle 1 angegebenen Menge einer 10 %igen wässrigen Natriumpersulfatlösung zugegeben und so die Polymerisation gestartet.

Die Starttemperatur betrug dabei 31,0°C. Die Polymerisation sprang sofort an und erreichte eine in Tabelle 1 angegebene maximale Temperatur. Nachdem die Temperatur um 1°C abgefallen war, wurde ein weiterer Zulauf aus 16,88 g einer 10 %igen wässrigen natriumpersulfatlösung hinzuggegeben und 10 Minuten später nochmals 11,81 g einer 10 %igen wässrigen Rongalitlösung hinzugefügt. Auf diese Weise erhält man eine Emulsion aus Mineralöl, Wasser und carboxylgruppenreichen Copolymeren der Acrylsäure.

### Dabei bedeuten

- Shellsol D 70: (Mineralöl der Shell AG)
- Span 80: (Emulgator der Uniqema auf Basis von Sorbitanmonooleat)
- Lutensol LF 400: (Emulgator der BASF Aktiengesellschaft, auf Basis von epoxidierten und propoxylierten, hauptsächlich linearen Alkoholen)
- Trilon^{R} D: (Komplexbildner der BASF Aktiengesellschaft, auf Basis des Trinatriumsalzes der Hydroxyethylendiamintriessigsäure in Wasser)
- Rongalit^{R} C: (Reduktionsmittel der BASF Aktiengesellschaft, auf Basis des Natriumsalzes der Hydroxymethansulfinsäure)
- Brüggolite FF6: Reduktionsmittel der Brüggemann Chemical auf Basis von 2-Hydroxy-2-sulfinatoessigsäure, Dinatriumsalz

**Tabelle 1**

| Beispiel | Menge Brüggolite FF6 [g] | Menge Natriumpersulfat vor Beginn der Polymerisation [g] | Tₘₐₓ [°C] | Stippen [%] | Quellkörper [%] |
|---|---|---|---|---|---|
| 1 | 0,67 | 5,06 | 77,8 | 0,01 | 0,24 |
| 2 | 1,35 | 5,06 | 80,0 | 0,01 | 0,07 |
| 3 | 1,69 | 5,06 | 80,5 | 0,01 | 0,02 |
| 4 | 2,03 | 5,06 | 82,3 | 0,01 | 0,01 |
| 5 | 1,35 | 4,22 | 77,6 | 0,01 | 0,01 |
| 6 | 1,35 | 3,38 | 76,6 | < 0,01 | 0,01 |
| 7 | 1,35 | 2,53 | 76,7 | < 0,01 | 0,01 |

### Allgemeine Arbeitsvorschrift für die Beispiele 8 bis 20

In einem Rührgefäß wurden 274 g destilliertes Wasser mit 200 g Acrylsäure (100 %ig) sowie 189 g einer 50 %igen wässrigen Lösung von Ammoniak, 50 g einer 50 %igen wässrigen Lösung von Acrylamid, 18 g einer 1 %igen wässsrigen Lösung von Methylenbisacrylamid, 4,72 g einer 0,4 %igen wässrigen Lösung von Trilon D, 4,5 g einer 1 %igen wässrigen Lösung von Ameisensäure und die in Tabelle 2 angegebene menge einer 1 %igen wässrigen Lösung von Brüggolite FF6 vermischt. Nach erfolgter Neutralisation der wässrigen Phase mit dem vorhandenen Ammoniak wurde diese in ein zweites geschlossenes Rührgefäß (2 Liter HWS, mit Ankerrührer) gegeben, in der sich eine organische Phase aus 200 g Shellsol D 70 (100%ig), 20 g Lutensol LF 400 (100 %ig) und 17,5 g Span 80 (100 %ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert, auf 31°C aufgeheizt und ein Zulauf aus der in Tabelle 2 angegebenen Menge eines Oxidationsmittel zugegeben und so die Polymerisation gestartet.

Die Starttemperatur betrug dabei 31,0°C. Die Polymerisation sprang sofort an und erreichte eine in Tabelle 2 angegebene Temperatur. Nachdem die Temperatur um 1°C abgefallen war, wurde ein weiterer Zulauf aus der in Tabelle 2 angegebenen Menge eines Oxidationsmittels hinzu gegeben und 10 Minuten später nochmals 7,88 g einer 10 %igen wässrigen Rongalitlösung hinzugefügt. Auf diese Weise erhält man eine Emulsion aus Mineralöl, Wasser und carboxylgruppenreichen Copolymeren der Acrylsäure.

**Tabelle 2**

| Beispiel | Menge Brüggolite FF6 [g] | Menge [g] und Art des Oxidationsmittel vor Beginn der Polymerisation | Menge [g] und Art des eingesetzten Oxidationsmittels nach Beginn der Polymerisation | Tₘₐₓ [°C] | Stippen [%] | Quellkörper [%] |
|---|---|---|---|---|---|---|
| 8 | 0,90 | 0,90; 10 %ige wässrige Natriumpersulfatlösung | 11,25; 10 %ige wässrige Natriumpersulfatlösung | 67,0 | < 0,01 | 0,01 |
| 9 | 0,90 | 0,68; 10 %ige wässrige Natriumpersulfatlösung | 11,25; 10 %ige wässrige Natriumpersulfatlösung | 67,7 | < 0,01 | 0,01 |
| 10 | 1,13 | 2,25; 10 %ige wässrige Natriumpersulfatlösung | 11,25; 10 %ige wässrige Natriumpersulfatlösung | 69,4 | < 0,01. | 0,01 |
| 11 | 1,13 | 1,91; 10 %ige wässrige Natriumpersulfatlösung | 11,25; 10 %ige wässrige Natriumpersulfatlösung | 57,1 | 0,01 | 0,28 |
| 12 | 1,13 | 2,25; 10 %ige wässrige Natriumpersulfatlösung | 11,25; 10 %ige wässrige Natriumpersulfatlösung | 58,5 | 0,01 | 0,09 |
| 13 | 1,13 | 2,59; 10 %ige wässrige Natriumpersulfatlösung | 11,25; 10 %ige wässrige Natriumpersulfatlösung | 62,8 | < 0,01 | 0,01 |
| 14 | 1,13 | 0,97; 3 %ige wässrige Wasserstoffperoxidlösung | 4,83; 3 %ige wässrige Wasserstoffperoxidlösung | 53,7 | < 0,01 | 0,01 |
| 15 | 1,13 | 1,45; 3 %ige wässrige Wasserstoffperoxidlösung | 4,83; 3 %ige wässrige Wasserstoffperoxidlösung | 54,0 | < 0,01 | 0,01 |
| 16 | 1,13 | 0,97; 3 %ige wässrige Wasserstoffperoxidlösung | 4,83; 3 %ige wässrige Wasserstoffperoxidlösung | 53,7 | < 0,01 | 0,03 |
| 17 | 1,13 | 0,49; 3 %ige wässrige Wasserstoffperoxidlösung | 11,25; 10 %ige wässrige Natriumpersulfatlösung | 59,5 | 0,05 | 0,09 |
| 18 | 1,13 | 0,25; 3 %ige wässrige Wasserstoffperoxidlösung | 11,25; 10 %ige wässrige Natriumpersulfatlösung | 59,1 | 0,02 | 0,06 |
| 19 | 1,13 | 0,13; 3 %ige wässrige Wasserstoffperoxidlösung | 11,25; 10 %ige wässrige Natriumpersulfatlösung | 55,6 | < 0,01 | 0,01 |
| 20 | 1,13 | 1,28; 3 %ige wässrige Wasserstoffperoxidlösung | 4,84; 3 %ige wässrige Wasserstoffperoxidlösung | 55,4 | < 0,01 | 0,13 |

### Allgemeine Arbeitsvorschrift für die Beispiele 21 bis 26

In einem Rührgefäß wurden 261,4 g destilliertes Wasser mit 200 g Acrylsäure (100%ig) sowie 188 g einer 50 %igen wässrigen Lösung von Ammoniak, 50 g einer 50 %igen wässrigen Lösung von Acrylamid, eines in Tabelle 3 angegebenen Vernetzers 4,72 g einer 0,4 %igen wässrigen Lösung von Trilon D, einen in Tabelle 3 angegebenen Reglers und 0,90 g einer 1 %igen wässrigen Lösung von Brüggolite FF6 vermischt. Nach erfolgter Neutralisation der wässrigen Phase mit dem vorhandenen Ammoniak wurde diese in ein zweites geschlossenes Rührgefäß (2 Liter HWS, mit Ankerrührer) gegeben, in der sich eine organische Phase aus 200 g Shellsol D 70 (100 %ig), 20 g Lutensol LF 300 (100%ig) und 17,5 g Span 80 (100 %if) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert, auf 31°C aufgeheizt und ein Zulauf aus 0,90 g einer 10 %igen wässrigen Natriumpersulfatlösung zugegeben und so die Polymerisation gestartet.

Die Starttemperatur betrug dabei 31,0°C. Die Polymerisation sprang sofort an und erreichte eine in Tabelle 3 angegebene maximale Temperatur. Nachdem die Temperatur um 1°C abgefallen war, wurde ein weiterer Zulauf aus 11,25 g einer 10 %igen wässrigen Natriumpersulfatlösung hinzu gegeben und 10 Minuten später nochmals 7,88 g einer 10 %igen wässrigen Rongalitlösung hinzugefügt. Auf diese Weise erhält man eine Emulsion aus Mineralöl, Wasser und carboxylgruppenreichen Copolymeren der Acrylsäure.

**Tabelle 3**

| Beispiel | Regler [g] | Vernetzer [g] | Tₘₐₓ | Stippen | Quellkörper |
|---|---|---|---|---|---|
| 21 | 2,25 g einer 1 %igen wässrigen Lösung von Ameisensäure | 33,75 g einer 1 %igen wässrigen Lösung von Methylenbisacrylamid | 63,3 | < 0,01 | 0,07 |
| 22 | 3,38 g einer 1 %igen wässrigen Lösung von Ameisensäure | 33,75 g einer 1 %igen wässrigen Lösung von Methylenbisacrylamid | 63,6 | < 0,01 | 0,09 |
| 23 | 4,50 g einer 1 %igen wässrigen Lösung von Ameisensäure | 33,75 g einer 1 %igen wässrigen Lösung von Methylenbisacrylamid | 63,6 | Nicht bestimmt | 0,02 |
| 24 | 4,50 g einer 1 %igen wässrigen Lösung von Ameisensäure | 0,50 g von Laromer LR 8765 | 64,7 | < 0,01 | 0,01 |
| 25 | 4,50 g einer 1 %igen wässrigen Lösung von Ameisensäure | 0,75 g von Laromer LR 8765 | 65,8 | 0,01 | 0,02 |
| 26 | 4,50 g einer 1 %igen wässrigen Lösung von Ameisensäure | 1,25 g von Laromer LR 8765 | 67,2 | 0,01 | 0,08 |

### Allgemeine Arbeitsvorschrift für die Beispiele 27 bis 29

In einem Rührgefäß wurden 273,5 g destilliertes Wasser mit 200 g Acrylsäure (100 %ig) sowie 188 g einer 50 %igen wässrigen Lösung von Ammoniak, 50 g einer 50 %igen wässrigen Lösung von Acrylamid, 18 g einer 1 %igen wässrigen Lösung von Methylenbisacrylamid, 4,80 g einer 0,4%igen wässrigen Lösung von Trilon C, 4,5 g einer 1 %igen wässrigen Lösung von Ameisensäure und 1,13 g einer 1 %igen wässrigen Lösung von Brüggolite FF6 vermischt. Nach erfolgter Neutralisation der wässsrigen Phase mit dem vorhandenen Ammoniak wurde diese in ein zweites geschlossenes Rührgefäß (2 Liter HWS, mit Ankerrührer) gegeben, in der sich eine organische Phase aus einer in Tabelle 4 angegebenen Menge Shellsol D 70 (100 %ig), 20 g Lutensol LF 300 (100 %ig) und einer in Tabelle 4 angegebenen menge Span 80 (100 %ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert, auf 28°C aufgeheizt und ein Zulauf aus 1,91 g einer 10 %igen wässrigen Natriumpersulfatlösung zugegeben und so die Polymerisation gestartet.

Die Starttemperatur betrug dabei 28°C. Die Polymerisation sprang sofort an und erreichte eine in Tabelle 4 angegebene Temperatur. Nachdem die Temperatur um 1°C abgefallen war, wurde ein weiterer Zulauf aus 11,25 g einer 10 %igen wässrigen Natriumpersulfatlösung hinzugegeben und 10 Minuten später nochmals 7,88 g einer 10 %i-gen wässrigen Rongalitlösung hinzugefügt. Auf diese Weise erhält man eine Emulsion aus Mineralöl, Wasser und carboxylgruppenreichen Copolymeren der Acrylsäure.

**Tabelle 4**

| Beispiel | Menge an Shellsol D70 | Tₘₐₓ | Stippen | Quellkörper |
|---|---|---|---|---|
| 27 | 180 | 50,5 | 0,02 | 0,52 |
| 28 | 170 | 53,7 | 0,02 | 0,45 |
| 29 | 160 | 54,4 | 0,02 | 0,50 |

### Allgemeine Arbeitsvorschrift für die Beispiele 30 bis 42

In einem Rührgefäß wurden 293,5 g destilliertes Wasser mit 200 g Acrylsäure (100 %ig) sowie die in Tabelle 5 angegebene Menge einer 50 %igen wässrigen Lösung von Ammoniak, 50 g einer 50 %igen wässrigen Lösung von Acrylamid, gegebenenfalls eines oder mehrerer der in Tabelle 5 angegebenen weiteren Monomere, 18 g einer 1 %i-gen wässrigen Lösung von Methylenbisacrylamid, 4,80 g einer 0,4%igen wässrigen Lösung von Trilon C, 4,5 g einer 1 %igen wässrigen Lösung von Ameisensäure und 1,13 g einer 1 %igen wässrigen Lösung von Brüggolite FF6 vermischt. Nach erfolgter Neutralisation der wässsrigen Phase mit dem vorhandenen Ammoniak wurde diese in ein zweites geschlossenes Rührgefäß (2 Liter HWS, mit Ankerrührer) gegeben, in der sich eine organische Phase aus 190 g Shellsol D 70 (100 %ig), 20 g Lutensol LF 300 (100 %ig) und einer in Tabelle 5 angegebenen Menge Span 80 (100 %ig) befand.

Unter Stickstoffbegasung (mit 15 Liter/Stunde) und Wasserbadkühlung wurden dann im zweiten Rührgefäß die vereinigten wässrigen und organischen Phasen bei 400 Umdrehungen pro Minute 60 Minuten lang voremulgiert. Danach wurde die Drehzahl des Rührers auf 200 Umdrehungen pro Minute verringert, auf 30°C aufgeheizt und ein Zulauf aus 1,91 g einer 10 %igen wässrigen Natriumpersulfatlösung zugegeben und so die Polymerisation gestartet.

Die Starttemperatur betrug dabei 30°C. Die Polymerisation sprang sofort an und erreichte eine in Tabelle 4 angegebene Temperatur. Nachdem die Temperatur um 1°C abgefallen war, wurde ein weiterer Zulauf aus 11,25 g einer 10 %igen wässrigen Natriumpersulfatlösung hinzugegeben und 10 Minuten später nochmals 7,88 g einer 10 %i-gen wässrigen Rongalitlösung hinzugefügt. Auf diese Weise erhält man eine Emulsion aus Mineralöl, Wasser und carboxylgruppenreichen Copolymeren der Acrylsäure.

**Tabelle 5**

| Beispiel | Menge an Span 80 | Erstes zusätzliches Monomer | Zweites zusätzliches Monomer | Menge an Ammoniak [g] | Tₘₐₓ |
|---|---|---|---|---|---|
| 30 | 17,5 | 10 g Hydroxyethylacrylat (100 %ig) | - | 186 | 55,4 |
| 31 | 17,5 | 10 g Hydroxypropylacrylat (100 %ig) | - | 186 | 53,5 |
| 32 | 17,5 | 20 g Maleinsäureanhydrid (100 %ig) | - | 186 | 46,5 |
| 33 | 21,75 | 25 g Hyddroxyethylacrylat (100 %ig) | 5 g Diethylenglykolmonovinylether | 186 | 54,2 |
| 34 | 21,75 | 20 g Hydroxyethylacrylat (100 %ig) | 20 g Lysin-monohydrat (100 %ig) | 181 | 65,6 |
| 35 | 21,75 | 20 g Hydroxyethylacrylat (100 %ig) | 20 g 4,9-Dioxadodecan-1,12-Diamin (100 %ig) | 181 | 68,3 |
| 36 | 21,75 | 25 g einer 80 %igen wässrigen Lösung von Dimethylaminoethylacrylat-methochlorid | 25 g Lysin-Monohydrat (100 %ig) | 180 | 66,7 |
| 37 | 21,75 | 25 g einer 80 %igen wässrigen Lösung von Diemthylaminoethylacrylat-methochlorid | 20 g Octamethylendiamin (100 %ig) | 170,5 | 71,3 |
| 38 | 21,75 | 20 g einer 80 %igen wässrigen Lösung von Dimethylaminoethylacrylat-Methochlorid | 20 g Hydroxyethylacrylat (100 %ig) | 176 | 70,3 |
| 39 | 21,75 | 20 g einer 80 %igen wässrigen Lösung von Diemthylaminoethylacrylat-Methochlorid | 20 g Hydroxyethylacrylat (100 %ig) 20 g Hexamethylendiamin (100 ig) | 164 | 70,3 |
| 40 | 21,75 | 25 g einer 80 %igen wässrigen Lösung von Dimethylaminoethylacrylat-methochlorid | 25 g Hydroxyethylacrylat (100 %ig) | 186 | 71,3 |
| 41 | 21,75 | 45 g einer 80 %igen wässrigen Lösung von Dimethylaminoethylacrylat-Methochlorid | - | 186 | 65,3 |
| 42 | 21,75 | 40 g Dimethylaminoacrylat (100 %ig) | - | 172,1 | 81,9 |

## Patentansprüche

1. Verfahren zur Herstellung von wasserlöslichen oder in Wasser quellbaren Homo- oder Copolymeren durch Homo- oder Copolymerisation von radikalisch polymerisierbaren wasserlöslichen und/oder wasserdispergierbaren Monomeren, gegebenenfalls mit weiteren Comonomeren und gegebenenfalls mindestens einem Vernetzer, in einer inversen Emulsionspolymerisation in Anwesenheit mindestens eines Redoxinitiatorpaares umfassend ein Oxidationsmittel und ein Reduktionsmittel, **dadurch gekennzeichnet, dass** das Reduktionsmittel 2-Hydroxy-2-sulfinatoessigsäure und/oder deren Salz ist.

2. Verfahren nach Anspruch 1, **dadurch gekennzeichnet, dass** als Monomere radikalisch polymerisierbare Carbonsäuren deren Salze oder Derivate eingesetzt werden.

3. Verfahren nach Anspruch 1 oder 2, **dadurch gekennzeichnet, dass** als Monomere eine Mischung aus Acrylsäure und/oder deren Salz und Acrylamid eingesetzt wird.

4. Verfahren nach einem der Ansprüche 1 bis 3, umfassend die folgenden Schritte:
a) Lösen mindestens eines Wasser-in-Öl-Emulgators oder mindestens eines Schutzkolloids in einer für die Polymerisation inerten hydrophoben Flüssigkeit, wodurch eine Ölphase gebildet wird,
b) Lösen oder Dispergieren der Monomere und gegebenenfalls weiteren Comonomere, eines Öl-in-Wasser-Emulgators und des mindestens einen Redoxinitiators in Wasser, wodurch eine wässrige Phase gebildet wird,
c) Mischen der Ölphase und der wässrigen Phase bis die wässrige Phase in der Ölphase emulgiert ist,
d) Homo- oder Copolymerisation der eingesetzten Monomere und gegebenenfalls weiteren Comonomere.

5. Verfahren nach einem der Ansprüche 1 bis 4, **dadurch gekennzeichnet, dass** in dem Verfahren keine Übergangsmetallverbindungen zugegeben werden.

6. Homo- oder Copolymere herstellbar nach einem Verfahren der Ansprüche 1 bis 5.

7. Homo- oder Copolymere nach Anspruch 6, **dadurch gekennzeichnet, dass** sie einen Restmonomerengehalt von maximal 5 Gew.-%, bevorzugt maximal 1 Gew.-%, besonders bevorzugt von maximal 0,1 Gew.-%, bezogen auf die Gesamtmasse der Homo- oder Copolymere aufweisen.

8. Wasser-in-Öl-Emulsion enthaltend eine Ölphase, die mindestens einen Wasser-in-Öl-Emulgator oder mindestens ein Schutzkolloid in einer inerten hydrophoben Flüssigkeit enthält, und eine in der Ölphase emulgierte wässrige Phase, die mindestens ein Homo- oder Copolymer gemäß Anspruch 6 oder 7 enthält.

9. Wasser-in-Öl-Emulsion nach Anspruch 7, **dadurch gekennzeichnet, dass** sie einen Stippenanteil von maximal 0,5%, bevorzugt maximal 0,01%, bezogen auf die Gesamtmasse der W/O-Emulsion aufweist.

10. Feste Zusammensetzung enthaltend mindestens einen Wasser-in-Öl-Emulgator oder mindestens ein Schutzkolloid, mindestens einen Öl-in-Wasser-Emulgator und mindestens ein Homo- oder Copolymer gemäß Anspruch 6 oder 7.

11. Verwendung von 2-Hydroxy-2-sulfinatoessigsäure und/oder deren Salz als Reduktionsmittel in einem Verfahren zur Herstellung von Homo- oder Copolymeren durch Homo- oder Copolymerisation von radikalisch polymerisierbaren wasserlöslichen und/oder wasserdispergierbaren Monomeren, gegebenenfalls mit weiteren Comonomeren, gegebenenfalls mindestens einem Vernetzer, in einer inversen Emulsionspolymerisation in Anwesenheit mindestens eines Redoxinitiatorpaares umfassend ein Oxidationsmittel und ein Reduktionsmittel.

12. Verwendung nach Anspruch 11, **dadurch gekennzeichnet, dass** in dem Verfahren zur Herstellung von Homo- oder Copolymeren keine Übergangsmetallverbindungen zugegeben werden.

13. Verwendung einer Wasser-in-Öl-Emulsion nach Anspruch 8 oder eines Homo- oder Copolymers nach Anspruch 6 oder 7 zur Verdickung und/oder als wasserabsorbierende Substanz von wässrigen Lösungen, bevorzugt zur Verdickung von Druckpasten.

14. Druckpasten enthaltend Homo- oder Copolymer gemäß Anspruch 6 oder 7, **dadurch gekennzeichnet, dass** sie einen Quellkörperanteil von maximal 0,5 %, bevorzugt 0,15 %, bezogen auf die Gesamtmasse der Druckpaste, aufweist.

15. Verwendung von 2-Hydroxy-2-sulfinatoessigsäure und/oder deren Salz als Reduktionskomponente eines Redoxinitiatorpaares umfassend ein Oxidationsmittel und ein Reduktionsmittel zur Vermeidung von Induktionszeiten bei der inversen Emulsionspolymerisation von radikalisch polymerisierbaren wasserlöslichen und/oder wasserdispergierbaren Monomeren, gegebenenfalls mit weiteren Comonomeren, wobei keine Übergangsmetallverbindungen zugegeben werden.

## Claims

1. A process for the preparation of water-soluble or water-swellable homopolymers or copolymers by homopolymerization or copolymerization of free-radically polymerizable water-soluble and/or water-dispersible monomers, if appropriate with further comonomers and if appropriate at least one crosslinker, in an inverse emulsion polymerization in the presence of at least one redox initiator pair comprising an oxidizing agent and a reducing agent, wherein the reducing agent is 2-hydroxy-2-sulfinatoacetic acid and/or salt thereof.

2. The process according to claim 1, wherein free-radically polymerizable carboxylic acids, or salts or derivatives thereof are used as monomers.

3. The process according to claim 1 or 2, wherein a mixture of acrylic acid and/or salt thereof and acrylamide is used as monomers.

4. The process according to any of claims 1 to 3, comprising the following steps:
a) dissolution of at least one water-in-oil emulsifier or at least one protective colloid in a hydrophobic liquid inert for the polymerization as a result of which an oil phase is formed,
b) dissolution or dispersion of the monomers and if appropriate further comonomers, an oil-in-water emulsifier and the at least one redox initiator in water, as result of which an aqueous phase is formed,
c) mixing of the oil phase and the aqueous phase until the aqueous phase is emulsified in the oil phase,
d) homopolymerization or copolymerization of the monomers used and if appropriate further comonomers.

5. The process according to any of claims 1 to 4, wherein no transition metal compounds are added in the process.

6. A homopolymer or copolymer preparable by a process of claims 1 to 5.

7. The homopolymer or copolymer according to claim 6, which has a residual monomer content of at most 5% by weight, preferably at most 1% by weight, particularly preferably of at most 0.1% by weight, based on the total mass of the homopolymer or copolymer.

8. A water-in-oil emulsion comprising an oil phase which comprises at least one water-in-oil emulsifier or at least one protective colloid in an inert hydrophobic liquid, and an aqueous phase emulsified in the oil phase which comprises at least one homopolymer or copolymer according to claim 6 or 7.

9. The water-in-oil emulsion according to claim 7, which has a speck content of at most 0.5%, preferably at most 0.01%, based on the total mass of the W/O emulsion.

10. A solid composition comprising at least one water-in-oil emulsifier or at least one protective colloid, at least one oil-in-water emulsifier and at least one homopolymer or copolymer according to claim 6 or 7.

11. The use of 2-hydroxy-2-sulfinatoacetic acid and/or salt thereof as reducing agent in a process for the preparation of homopolymers or copolymers by homopolymerization or copolymerization of free-radically polymerizable water-soluble and/or water-dispersible monomers, if appropriate with further comonomers, if appropriate at least one crosslinker, in an inverse emulsion polymerization in the presence of at least one redox initiator pair comprising an oxidizing agent and a reducing agent.

12. The use according to claim 11, wherein no transition metal compounds are added in the process for the preparation of homopolymers or copolymers.

13. The use of a water-in-oil emulsion according to claim 8 or of a homopolymer or copolymer according to claim 6 or 7 for the thickening and/or as water-absorbing substance of aqueous solutions, preferably for the thickening of printing pastes.

14. A printing paste comprising homopolymer or copolymer according to claim 6 or 7, which has a gel body content of at most 0.5%, preferably 0.15%, based on the total mass of the printing paste.

15. The use of 2-hydroxy-2-sulfinatoacetic acid and/or salt thereof as reducing component or a redox initiator pair comprising an oxidizing agent and a reducing agent for avoiding induction times during the inverse emulsion polymerization of free-radically polymerizable water-soluble and/or water-dispersible monomers, if appropriate with further comonomers, during which no transition metal compounds are added.

## Revendications

1. Procédé de fabrication d'homopolymères ou de copolymères hydrosolubles ou gonflables dans l'eau, par homopolymérisation ou copolymérisation de monomères hydrosolubles et/ou dispersibles dans l'eau et polymérisables par voie radicalaire, éventuellement, avec d'autres comonomères et, éventuellement, au moins un agent de réticulation, selon un mode de polymérisation en émulsion inverse en présence d'au moins une paire d'initiateurs redox comprenant un agent d'oxydation et un agent de réduction, **caractérisé en ce que** l'agent de réduction est l'acide 2-hydroxy-2-sulfinatoacétique et/ou son sel.

2. Procédé selon la revendication 1, **caractérisé en ce que** l'on utilise, comme monomères, des acides carboxyliques polymérisables par voie radicalaire, leurs sels ou leurs dérivés.

3. Procédé selon la revendication 1 ou 2, **caractérisé en ce que** l'on utilise, comme monomère, un mélange d'acide acrylique et/ou de son sel, et d'acrylamide.

4. Procédé selon l'une quelconque des revendications 1 à 3, comprenant les étapes suivantes :
a) la dissolution d'au moins un agent émulsionnant eau-dans-l'huile ou d'au moins un colloïde protecteur dans un liquide hydrophobe inerte vis-à-vis de la polymérisation, de sorte que l'on obtienne une phase huileuse,
b) la dissolution ou la dispersion des monomères et, éventuellement, d'autres comonomères, d'un agent émulsionnant huile-dans-l'eau et du au moins un initiateur redox dans de l'eau, de sorte que l'on obtienne une phase aqueuse,
c) le mélange de la phase huileuse et de la phase aqueuse jusqu'à ce que la phase aqueuse soit en émulsion dans la phase huileuse,
d) l'homopolymérisation ou la copolymérisation des monomères utilisés et, éventuellement, d'autres comonomères.

5. Procédé selon l'une quelconque des revendications 1 à 4, **caractérisé en ce que** l'on n'ajoute aucun composé de métal de transition dans le procédé.

6. Homopolymères ou copolymères, que l'on peut fabriquer en utilisant le procédé selon les revendications 1 à 5.

7. Homopolymères ou copolymères selon la revendication 6, **caractérisés en ce qu'**ils présentent une teneur résiduelle en monomères de 5 % en poids au maximum, de préférence, de 1 % en poids au maximum, mieux encore, de 0,1% en poids au maximum, par rapport à la masse totale des homopolymères ou copolymères.

8. Emulsion eau-dans-l'huile, comprenant une phase huileuse qui contient au moins un agent émulsionnant eau-dans-l'huile ou au moins un colloïde protecteur dans un liquide hydrophobe inerte, et une phase aqueuse en émulsion dans la phase huileuse, qui contient au moins un homopolymère ou un copolymère selon la revendication 6 ou 7.

9. Emulsion eau-dans-l'huile selon la revendication 7, **caractérisée en ce qu'**elle présente une proportion d'yeux de poisson de 0,5 % au maximum, de préférence, de 0,01 % au maximum, par rapport à la masse totale de l'émulsion eau-dans-l'huile.

10. Composition solide contenant au moins un agent émulsionnant eau-dans-l'huile ou au moins un colloïde protecteur, au moins un agent émulsionnant huile-dans-l'eau et au moins un homopolymère ou copolymère selon la revendication 6 ou 7.

11. Utilisation de l'acide 2-hydroxy-2-sulfinato-acétique et/ou de son sel, comme agent de réduction dans un procédé de fabrication d'homopolymères ou de copolymères par homopolymérisation ou copolymérisation de monomères hydrosolubles et/ou dispersibles dans l'eau et polymérisables par voie radicalaire, éventuellement avec d'autres comonomères, éventuellement au moins un agent de réticulation, selon un mode de polymérisation en émulsion inverse en présence d'au moins une paire d'initiateurs redox comprenant un agent d'oxydation et un agent de réduction.

12. Utilisation selon la revendication 11, **caractérisée en ce que** l'on n'ajoute aucun composé de métal de transition dans le procédé de fabrication d'homopolymères ou de copolymères.

13. Utilisation d'une émulsion eau-dans-l'huile selon la revendication 8 ou d'un homopolymère ou copolymère selon la revendication 6 ou 7, dans le but d'épaissir des solutions aqueuses, et/ou comme substance absorbant l'eau de solutions aqueuses, de préférence, dans le but d'épaissir des pâtes d'impression.

14. Pâtes d'impression contenant un homopolymère ou un copolymère selon la revendication 6 ou 7, **caractérisées en ce qu'**elles présentent une proportion de corps gonflants de 0,5 % au maximum, de préférence, de 0,15 %, par rapport à la masse totale de la pâte d'impression.

15. Utilisation de l'acide 2-hydroxy-2-sulfinato-acétique et/ou de son sel, comme composant de réduction d'une paire d'initiateurs redox, comprenant un agent d'oxydation et un agent de réduction, pour éviter les périodes d'induction dans le cadre d'une polymérisation en émulsion inverse de monomères hydrosolubles et/ou dispersibles dans l'eau et polymérisables par voie radicalaire, éventuellement avec d'autres comonomères, aucun composé de métal de transition n'étant ajouté.
